Europäisches Patentamt

European Patent Office

Office européen des brevets

(19)

(11) Veröffentlichungsnummer: **0 263 365**
**A1**

(12) **EUROPÄISCHE PATENTANMELDUNG**

(21) Anmeldenummer: 87113985.3

(51) Int. Cl.⁴: **H02M 7/515**

(22) Anmeldetag: **24.09.87**

(30) Priorität: **06.10.86 DE 3634035**

(43) Veröffentlichungstag der Anmeldung:
**13.04.88 Patentblatt 88/15**

(84) Benannte Vertragsstaaten:
**AT CH DE FR GB IT LI**

(71) Anmelder: **Siemens Aktiengesellschaft Berlin und München**
**Wittelsbacherplatz 2**
**D-8000 München 2(DE)**

(72) Erfinder: **Heinle, Georg, Dipl.-Ing.**
**Moorbachweg 14**
**D-8520 Erlangen(DE)**

(54) **Verfahren zur Reduzierung der Momentwelligkeit eines elektrischen Antriebes, der von einem Stromzwischenkreisumrichter mit Phasenfolgelöschung gespeist wird.**

(57) Beim gepulsten Betrieb einer von einem Stromzwischenkreis-umrichter mit Phasenfolgelöschung betriebenen Asynchronmaschine tritt eine störende Momentenwelligkeit aufgrund der für den Ablauf einer vollständigen Kommutierung benötigten Wechselrichtermindestzeit ($T_{MIN}$) auf. Es ist ein wesentliches Merkmal der Erfindung, daß die Betriebsfähigkeit des Wechselrichters nicht beeinträchtigt wird, auch wenn die Einschaltdauern einzelner Thyristoren die Mindestzeit unterschreiten. Je nach dem Grad der dabei auftretenden "unvollständigen Kommutierung" wird zwischen einer "ersten Art" und "zweiten Art" unterschieden, wobei bei der zweiten Art vorteilhaft die Dauer der tatsächlichen Einschaltimpulse zur Aufrechterhaltung eines linearen Zusammenhangs zwischen der Stromzeitfläche und der Sollimpulsdauer mittels einer Korrekturfunktion angepaßt wird.

FIG 4

EP 0 263 365 A1

## Verfahren zur Reduzierung der Momentenwelligkeit eines elektrischen Antriebes, der von einem Stromzwischenkreisumrichter mit Phasenfolgelöschung gespeist wird

Die Erfindung betrifft ein Verfahren zur Erzeugung eines im zeitlichen Mittel möglichst gleichmäßigen Umlaufes eines effektiven Raumzeigers des Ständerstromes einer Asynchronmaschine, die von einem durch einen Gleichstromzwischenkreis gespeisten Wechselrichter mit Phasenfolgelöschung betrieben wird, wobei durch Zünden je eines Wechselrichterthyristors in einer von der Maschinendrehrichtung abhängigen Kommutierungsreihenfolge zyklisch umlaufend je einer von sechs äquidistanten natürlichen Raumzeigern wirksam wird, und bei niedrigen Maschinendrehzahlen zusätzlich pulsartig zwischen je zwei benachbarten natürlichen Raumzeigern umgeschaltet wird.

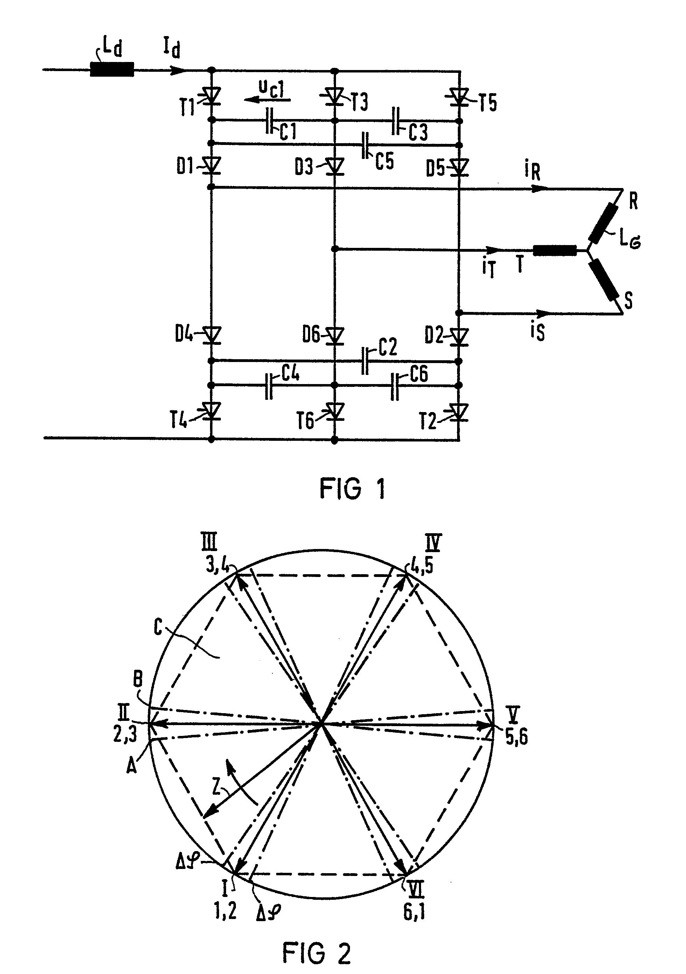

Der Wechselrichterteil eines solchen Stromzwischenkreisumrichters mit Phasenfolgelöschung und die davon gespeisten Ständerstränge einer Asynchronmaschine sind in FIG 1 dargestellt. Der Umrichter wird aus einem Gleichstromzwischenkreis mit einem über die Drossel $L_d$ eingeprägten Zwischenkreisstrom $I_d$ gespeist. Jeder Strang der Asynchronmaschine ist mit der Mitte eines Astes des Wechselrichters verbunden, dessen obere und untere Hälfte aus je einem Thyristor mit Reihendiode besteht. So ist z.B der Strang R in der Mitte der beiden Reihenschaltungen aus Thyristor T1 und Diode D1 bzw. Diode D4 und Thyristor T4 angeschlossen. Alle Thyristoren in der oberen bzw. unteren Wechselrichterhälfte, d.h. die Thyristoren T1, T3, T5 bzw. T4, T6, T2 sind über Kommutierungskondensatoren C1, C3, C5 bzw. C2, C4, C6 mitverbunden.

Die Stromführungsdauer eines jeden Thyristors in diesem selbstgeführten Stromrichter ist in gewünschter Weise einstellbar, indem ein anderer Thyristor derselben Wechselrichterhälfte im geeigneten Moment gezündet und dadurch gleichzeitig der bisher stromführende Thyristor aufgrund der Ladung des zwischen beiden Thyristoren liegenden Kommutierungskondensators schlagartig abgeschaltet wird.

Zur unterbrechungsfreien Aufrechterhaltung des Zwischenkreisstromes $I_d$ ist ständig je ein Thyristor in der oberen und unteren Wechselrichterhälfte eingeschaltet. Ferner werden die Thyristoren entsprechend einer von der Maschinendrehrichtung abhängigen Kommutierungsreihenfolge abwechselnd in der oberen und unteren Wechselrichterhälfte in der Führung des Zwischenkreisstromes $I_d$ zyklisch abgelöst. Auf diese Weise ist am Ausgang des Wechselrichters annähernd ein Drehstromsystem mit einstellbarer Frequenz erzeugbar. Werden die davon in den Strängen des Ständers einer angeschlossenen Asynchronmaschine erzeugten Ströme mittels eines "komplexen Raumzeigers" dargestellt, wie dies zur Beschreibung der Vorgänge in elektrischen Maschinen üblich ist, so ergibt sich ein Zeigerdiagramm entsprechend der FIG 2. Der Raumzeiger Z des Ständerstromes läuft je nach Kommutierungsrichtung in der komplexen Ebene um und kann dabei eine von sechs äquidistanten, festen Lagen einnehmen, natürliche Raumzeiger genannt, deren Spitzen ein gleichmäßiges Sechseck bilden. Diese sind in FIG 2 mit der Bezeichnung I bis VI und den Indizes 1,2 bis 6,1 der dazugehörigen Wechselrichterthyristoren versehen. Ist z.B. das Thyristorpaar T4, T5 stromführend, so stellt sich der natürliche Raumzeiger mit der Lage IV ein. Wird der Thyristor T4 durch Zünden des Thyristors T6 in der Stromführung abgelöst, so springt der Raumzeiger Z in die Lage des natürlichen Raumzeigers V.

Je "gleichmäßiger" dabei im zeitlichen Mittel der Raumzeiger des Ständerstromes in der komplexen Ebene "umläuft", um so oberschwingungsärmer ist das von der Asynchronmaschine erzeugte Drehmoment. Der Idealfall liegt beim Betrieb der Asynchronmaschine an einem symmetrischen Netz mit sinusförmigen Strömen vor. In diesem Fall läuft der Raumzeiger kontinuierlich auf einer Kreisbahn um und nimmt jede mögliche Lage zwischen den natürlichen Raumzeigern ein. Die Speisung einer Asynchronmaschine bei mittleren und hohen Drehzahlen über einen Wechselrichter gemäß der FIG 1 kommt diesem Idealfall bereits recht nahe. Insbesondere bei Vorhandensein eines ausreichenden Schwungmomentes des Maschinensatzes macht sich der diskontinuierliche "Umlauf" des Stromzeigers auf den sechs möglichen Lagen der natürlichen Raumzeiger kaum bemerkbar. In der Praxis ist dabei die Rundlaufgüte der Maschine in der Regel ausreichend. Insbesondere bei kleinen bzw. nahe dem Wert Null liegenden Drehzahlen hingegen sollten zusätzliche Maßnahmen zur Verbesserung der Rundlaufeigenschaften ergriffen werden. Hierzu wird in der Regel in einen "gepulsten Betrieb" übergegangen, bei dem der Raumzeiger mit einem durch ein Modulationsverfahren vorgegebenen, winkelabhängigen Tastverhältnis pulsartig zwischen je zwei der natürlichen Raumzeigern hin-und hergeschaltet wird. Der sich durch diese "Mischung" ergebende "effektive" Stromraumzeiger kann somit theoretisch jede mögliche Zwischenlage zwischen den natürlichen Raumzeigern einnehmen und läuft somit im zeitlichen Mittel "quasikontinuierlich" um. Ein Verfahren dieser Art ist z.B. in der deutschen Patentschrift 22 36 763 dargestellt.

Dennoch tritt auch bei diesem Pulsbetrieb noch eine störende Momentenwelligkeit besonders bei kleinen Maschinendrehzahlen auf. Diese hat ihre Ursache darin, daß der effektive Raumzeiger des Ständerstromes "verbotene Winkelzonen" um die natürlichen Raumzeigerlagen herum sprungartig überquert. In FIG 2 sind diese verbotenen Winkelzonen der Größe 2 $\Delta\phi$ mit strichpunktierter Linie eingetragen. Der effektive Raumzeiger Z springt z.B bei Erreichen der Grenze A der verbotenen Winkelzone um die Lage II auf den darin befindlichen natürlichen Raumzeiger und von da wiederum auf die Grenze B, bevor er den folgenden Winkelbereich C bis zum nächsten verbotenen Winkelbereich um den natürlichen Raumzeiger III wiederum quasikontinuierlich durchlaufen kann. Die Breite der verbotenen Winkelzonen wird bestimmt durch die sogenannte Wechselrichtermindestzeit, welche den mindest zulässigen Zeitabstand zwischen zwei Kommutierungen im Wechselrichter angibt. Wie aus den, z.B. in der ETZ-A, Band 96 (1975), Heft 11 auf Seite 520 - 523 im Detail dargestellten Vorgängen während einer Kommutierung in einem selbstgeführten Wechselrichter mit Phasenfolgelöschung zu ersehen ist, laden sich die Kommutierungskondensatoren nach Zündung eines Wechselrichterthyristors um. Der Kommutierungsvorgang ist dabei erst dann vollständig abgeschlossen, wenn die betroffenen Kommutierungskondensatoren ihren vollen Ladezustand bei umgekehrtem Vorzeichen wieder erreicht haben, d.h. alle Einschwingungsvorgänge beendet sind. Zumindest um diesen Zeitraum muß die nächste Zündung eines Thyristors verzögert werden. Soll z.B gemäß der Darstellung in FIG 2 der durch pulsartiges Umschalten zwischen den Wechselrichterthyristoren T1 und T3 erzeugte effektive Raumzeiger Z auf den natürlichen Raumzeiger in der Lage II zulaufen, so wird das Einschaltverhältnis der beiden Thyristoren zugunsten des Thyristors T3 verschoben und dementsprechend die Dauer der Einschaltimpulse für den Thyristor T1 immer kürzer. Unterschreiten diese die Wechselrichtermindestzeit, so springt der Raumzeiger Z nach einer kurzen Verweilzeit in der Lage A auf die Lage II. Werden nun zum Weiterlauf des Stromzeigers Z bei eingeschaltetem Thyristor T3 die Thyristoren T2 und T4 untereinander pulsartig in der Stromführung abgewechselt, so springt der Raumzeiger Z wiederum nach einer kurzen Verweilzeit zunächst auf die Lage B, da erst dann die Wechselrichtermindestzeit nicht unterschreitende Einschaltimpulse für den Thyristor T4 auftreten. Man erkennt, daß das Einschaltverhältnis der beiden an der jeweiligen "Mischung" beteiligten Thyristoren zur Erzeugung des effektiven Raumzeigers Z in einer Zwischenlage zu den natürlichen Raumzeigern durch die Wechselrichtermindestzeit begrenzt ist.

Eine Erhöhung der Frequenz des pulsartigen Umschaltens, Pulsfrequenz genannt, vergleichmäßigt zwar den Umlauf des effektiven Raumzeigers in den Zwischenlagen. Dies zieht aber auch eine Vergrößerung der verbotenen Winkelbereiche nach sich. Bei höherer Pulsfrequenz sind die Einschaltimpulse pro Pulsperiode zwar feiner abgestuft, doch treten bei Annäherung des effektiven Raumzeigers an einen natürlichen Raumzeiger früher Einschaltimpulse auf, welche die Mindestzeit unterschreiten und somit unterdrückt werden müssen.

Zur Verringerung der Breite der verbotenen Winkelzonen wird in der nicht vorveröffentlichten europäischen Patentanmeldung mit der Anmeldenummer 86108484.6 eine "winkelabhängige Pulsfrequenzmodulation" vorgeschlagen. Dabei wird der Wert der Pulsfrequenz groß gewählt, wenn der effektive Raumzeiger etwa in der Mitte der zulässigen Winkelbereiche zwischen zwei natürlichen Raumzeigern liegt. Befindet sich dagegen der effektive Raumzeiger in der Nähe der Lage eines natürlichen Raumzeigers, so wird die Pulsfrequenz abgesenkt. Hierdurch kann die Breite der verbotenen Winkelbereiche merklich verringert werden. Letztlich ist aber auch bei diesem Verfahren die Breite der verbotenen Winkelzonen durch die einzuhaltende Wechselrichtermindestzeit vorgegeben, auch wenn durch die Pulsfrequenzabsenkung in den Randbereichen das Auftreten von die Mindestzeit unterschreitenden Einschaltimpulsen auf einen näher an den natürlichen Raumzeigern befindlichen Bereich komprimiert werden kann.

Es ist somit die Aufgabe der vorliegenden Erfindung, die Beschränkung des Einschaltverhältnisses zweier am Pulsbetrieb beteiligter Thyristoren aufgrund der einzuhaltenden Wechselrichtermindestzeit, und damit die Momentenwelligkeit einer von einem Stromzwischenkreis-Umrichter mit Phasenfolgelöschung betriebenen Asynchronmaschine zu reduzieren. Insbesondere sollen dabei keinerlei Eingriffe in den Wechselrichter selbst notwendig sein. Zudem sollen andere, bereits bekannte Verfahren zur Verbesserung der Rundlaufgüte auch weiterhin verwendbar sein, insbesondere die bereits erwähnte "winkelabhängige Pulsfrequenzmodulation".

Die Aufgabe wird dadurch gelöst, daß ein beim pulsartigen Umschalten auftretender Einschaltimpuls für einen der beiden Wechselrichterthyristoren, der kürzer als die für den Ablauf einer vollständigen Wechselrichterkommutierung notwendigen Mindestzeit und länger als die Wechselrichterschonzeit ist, nicht unterdrückt und nach seinem Ablauf dennoch die nächste Kommutierung eingeleitet wird. Vorteilhafte Weiterbildung des erfindungsgemäßen Verfahrens sind in den Unteransprüchen enthalten.

Anhand der FIG 3 bis 7 wird die Erfindung nachfolgend näher erläutert. Dabei zeigt

FIG 1 den Wechselrichterteil eines Stromzwischenkreis-Umrichters mit Phasenfolgelöschung,

FIG 2 den komplexen Raumzeiger des Ständerstromes, mit den Lagen der natürlichen Raumzeiger und den verbotenen Winkelbereichen,

FIG 3 den Verlauf zweier Phasenströme und einer Kommutierungskondensatorspannung bei einer "vollständigen Kommutierung",

FIG 4 den Verlauf eines Phasenstromes und einer Kommutierungskondensatorspannung bei einer "unvollständigen Kommutierung erster Art",

FIG 5 den Verlauf eines Phasenstromes und einer Kommutierungskondensatorspannung bei einer "unvollständigen Kommutierung zweiter Art",

FIG 6 den Verlauf eines Phasenstromes und einer Kommutierungskondensatorspannung bei einer weiteren "unvollständigen Kommu-tierung zweiter Art", und

FIG 7 den Verlauf einer Korrekturfunktion für die tatsächliche Einschaltdauer.

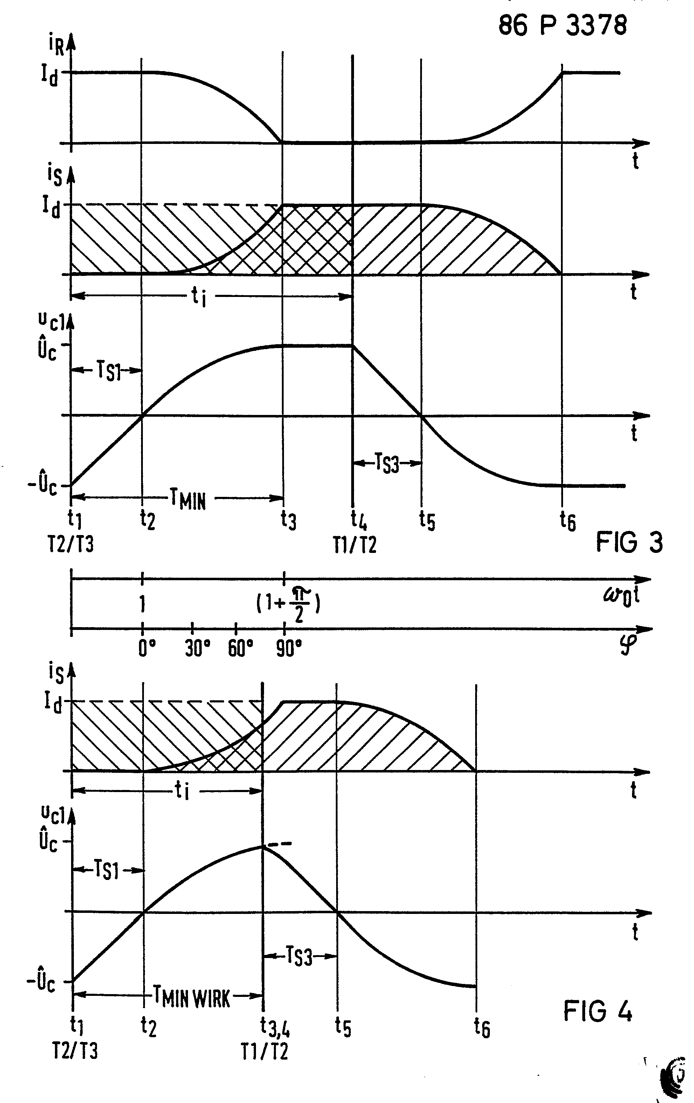

Der Verlauf einer vollständigen Kommutierung läßt sich in zwei Hauptabschnitte unterteilen, wie dies auch der bereits zitierten ETZ-A, Band 96 (1975) Heft 11 auf den Seiten 520-523 zu entnehmen ist. Anhand der FIG 3 wird dies am Beispiel je einer Kommutierung von Thyristor T1 auf T3 und T3 auf T1 kurz erläutert.

Unmittelbar nach Zündung des Thyristors T3 im Zeitpunkt $t_1$ wird der bisher stromführende Thyristor T1 aufgrund der an dessen Anoden-Kathoden-Strecke in Sperrichtung anliegenden negativen Kondensatorspannung $u_{C1}$ schlagartig gesperrt. Der Zwischenkreisstrom $I_d$ fließt nun über den Thyristor T3 und die Diode D1 noch so lange unverändert in den Motorstrang R, bis die Spannung am Kondensator C1, der mit konstanter Geschwindigkeit umgeladen wird, im Zeitpunkt $t_2$ die Nullinie schneidet. In diesem Moment ist der "erste Kommutierungsabschnitt" abgeschlossen, welcher durch unveränderte Phasenströme $I_R$, $I_S$ und einer konstanten Umladung des beteiligten Kommutierungskondensators C1 gekennzeichnet ist. Der Zeitabschnitt $T_{12} = t_2 - t_1$ wird auch als Wechselrichterschonzeit $T_{S3}$ bezeichnet und ist vom Betrag $|-\hat{U}_c|$ der Spannung des Kondensators C1 im Zündaugenblick $t_1$ abhängig. Mit der Maschineninduktivität $L_\delta$ und den beiden Beziehungen

$$\hat{U}_{c1} = I_d \cdot \sqrt{\frac{2 \, L_\delta}{C^*}} \quad \text{und} \quad C^* = \frac{3}{2} C \quad \text{mit} \quad C1 = \ldots = C6 = C$$

für den Scheitelwert $\hat{U}_{c1}$ der Kondensatorspannung $u_{cl}$ und der Ersatzkapazität $C^*$ für die drei Kommutierungskondensatoren einer Wechselrichterhälfte folgt für die Wechselrichterschonzeit

$$T_{12} = \frac{C^*}{I_d} \cdot \hat{U}_{c1} = \sqrt{2 \, L_\delta \cdot C^*}$$

Die Wechselrichterschonzeit muß stets größer sein als die Thyristorfreiwerdezeit, da sonst zu frühzeitig eine positive Spannung an der Anoden-Kathoden-Strecke des gerade gesperrten Thyristors T1 anliegen und dieser in den Durchlaßzustand zurückkippen würde.

Im "zweiten Kommutierungsabschnitt" läuft die eigentliche Strangstromkommutierung ab, im betrachteten Beispiel von $I_D$ auf $i_S$. Dessen Zeitdauer $T_{23} = t_3 - t_2$ entspricht dem vierten Teil einer Schwingungsperiode im "Kommutierungsschwingkreis", der aus den Kommutierungskondensatoren $C_K$ mit k = 1,3,5 oder 2,4,6 der betroffenen Wechselrichterhälfte und zwei Streuinduktivitäten $L_\delta$ besteht. Mit der Kreisfrequenz

$$\omega_0 = \sqrt{2 \, L \cdot C^*}$$

dieser Schwingung ergibt sich:

$$T_{23} = \frac{\pi}{2 \, \omega_0} \cdot$$

4

Im Zeitpunkt $t_3$ ist die Kommutierung des Zwischenkreisstromes I $_d$ auf den Ast mit dem Thyristor T3 und der Reihendiode D3, an den der Strang S der Asynchronmaschine angeschlossen ist, vollständig abgeschlossen. Der Strom $i_S$ hat sich bis auf den vollen Wert des Zwischenkreisstromes $I_d$ und die Zwischenkreiskondensatorspannung $u_{C1}$ auf den vollen Spannungsscheitelwert $\hat{U}_c$, nun bei positivem Vorzeichen, aufgeladen. Die Summe der Zeitdauern $T_{12}$ und $T_{23}$ für den ersten und zweiten Kommutie rungsabschnitt entspricht der "Wechselrichtermindestzeit". Diese muß mindestens eingehalten werden, bevor ein anderer Thyristor der gleichen Wechselrichterhälfte, z.B. T1 im Zeitpunkt $t_4$, gezündet werden darf. Es gilt

$$T_{MIN} = T_{12} + T_{23} = \frac{1}{\omega_0} \left( 1 + \frac{\pi}{2} \right)$$

So werden Einschaltimpulse, deren Zeitdauern diese Mindestzeit insbesondere bei dem bereits beschriebenen Pulsbetrieb unterschreiten würden, bei Wechselrichtersteuerungsverfahren nach dem bekannten Stand der Technik unterdrückt.

Es ist ein besonderes Merkmal der in der vorliegenden Erfindung enthaltenen technischen Lehre, daß die Wechselrichtermindestzeit tatsächlich bis zu einem bestimmten Grad unterschritten werden kann, ohne die prinzipielle Funktionsweise eines Wechselrichters mit Phasenfolgelöschung zu beeinträchtigen. Vielmehr kann eine noch nicht vollständig abgelaufene Kommutierung vorzeitig abgebrochen werden, indem bereits vor Ablauf der Wechselrichtermindestzeit durch Zündung eines anderen Thyristors eine weitere Kommutierung eingeleitet wird. Dieser als "unvollständige Kommutierung" bezeichnete Vorgang wird nachfolgend anhand der FIG 4, 5 und 6 näher erläutert, wobei je nach Grad der Unvollständigkeit zwischen einer unvollständigen Kommutierung "erster Art" und "zweiter Art" unterschieden wird.

So kann erfindungsgemäß die Stromführungsdauer z.B. des Thyristors T3 gemäß der FIG 4 durch Zünden des Thyristors T1 im Zeitpunkt $t_{3,4}$ vorzeitig beendet werden. Der Kommutierungskondensator C1 wird nun nicht mehr ganz auf den vollen Scheitelwert $\hat{U}_c$ entsprechend dem stationären Ausgangszustand im Zeitpunkt $t_1$ umgeladen. Die tatsächliche Mindestzeit $T_{MIN\ WIRK}$ entspricht nun exakt der Einschaltdauer $t_i$ und ist kürzer als die Wechselrichtermindestzeit $T_{MIN}$ bei vollständiger Kommutierung. Da im ersten Kommutierungsabschnitt einer unmittelbar darauf folgenden Zündung des Thyristors T1 im Zeitpunkt $t_{3,4}$ die Kondensatorspannung noch positiv ist, erreicht der Phasenstrom $i_s$ dennoch den Maximalwert $I_d$ . Dieser innerhalb der Zeitdauer der unvollständigen Kommutierung von T3 nicht vollständig abgeschlossene Vorgang der Kommutierung des Zwischenkreisstromes $I_d$ auf den Strang S wird somit zum Teil in den nächsten Kommutierungsvorgang verschoben und dort beendet. Es findet also eine Überlappung der Kommutierungsvorgänge statt. Dabei wird die Stromunterbrechungsfähigkeit in den Ästen des Wechselrichters mittels der Kommutierungskondensatoren nicht beeinträchtigt, so lange zumindest die Schonzeit $T_S$ des der unvollständigen Kommutierung ausgesetzten Thyristors eingehalten wird, in FIG 4 z.B. $T_{S1}$ von Thyristor T1. Dieser darf also nicht so frühzeitig "abgeschaltet" werden, daß der Zündzeitpunkt $t_{3,4}$ auf den Zeitpunkt $t_2$ fällt oder diesen sogar unterschreitet.

Letztlich kommt es für eine vom Wechselrichter betriebene Asynchronmaschine weniger auf die Form der Ständerstrangströme an, als auf die während deren Dauer erzeugbare Stromzeitfläche. So ist es vorteilhaft, den bei der vollständigen Kommutierung geltenden linearen Zusammenhang

$$FI = I_d \bullet t_i$$

zwischen der Stromzeitfläche FI und der Einschaltdauer $t_i$ des jeweiligen Wechselrichterthyristors, mit dem Zwischenkreisstrom $I_d$ als Proportionalitätskonstante, auch im Falle der erfindungsgemäßen unvollständigen Kommutierung aufrechtzuerhalten.

So ist in FIG 3 im Diagramm des Strangstromes $i_s$ bei vollständiger Kommutierung die theoretische Stromzeitfläche FI als Rechteck mit den Kanten $I_d$ und $t_i$ eingetragen. Die sich tatsächlich im Strang S einstellende Stromzeitfläche unter dem aktuellen Verlauf des Strangstromes $i_S$, in FIG 3 mit einer von links unten nach rechts oben verlaufenden Schraffur versehen, ist mit FI flächengleich. Bei Verkürzung bzw. Verlängerung der Einschaltdauer $t_i$ verändert sich der Wert der beiden Flächen mit der Proportionalitätskonstanten $I_d$.

Diese Verhältnisse gelten unverändert auch bei der in FIG 4 dargestellten erfindungsgemäßen unvollständigen Kommutierung. Dabei wird beispielhaft ca. 12 elektrische Winkelgrade vor Beendigung der vollständigen Kommutierung bei 90 elektrischen Winkelgraden die Kommutierung des Zwischenkreisstromes $I_d$ auf den Strang S im Zeitpunkt $t_{3,4}$ vorzeitig eingeleitet. Je eine auf $\omega_0$ normierte Zeit- und Winkelachse ist zwischen den FIG 3 und 4 eingetragen und für beide gültig. Dabei beginnt die

Zeitzählung im Zeitpunkt $t_1$ und die Winkelzählung im Zeitpunkt $t_2$. Die unveränderte lineare Steuerbarkeit der Stromzeitfläche auch bei einer unvollständigen Kommutierung dieser Größenordnung zeigt ein Flächenvergleich der theoretischen und der tatsächlichen Stromzeitfläche. Es liegen somit keinerlei Nachteile gegenüber der vollständigen Kommutierung vor. Wie ferner aus dem Verlauf der Kondensatorspannung $u_{Cl}$ zu ersehen ist, ergibt sich bei der auf die unvollständige Kommutierung im Zeitpunkt $t_{3,4}$ anschließenden Kommutierung sogar eine größere Schonzeit $T_{S3}$ für den in der Stromführung abgelösten Thyristor T3, da aufgrund des verzögerten Anstieges $i_S$ auf $I_d$ auch der Kondensator langsamer umgeladen wird.

Ist insbesondere bei weiterer Verkürzung der Einschaltdauer $t_i$ diese Linearität der Steuerung der Stromzeitfläche FI mittels der Proportionalitätskonstanten $I_d$ nicht mehr gegeben, insbesondere bei einer überproportional mit der Dauer der Einschaltimpulse abnehmenden Stromzeitfläche, ist es vorteilhaft, Maßnahmen zur Linearisierung des Verhältnisses von Stromzeitfläche zu Einschaltdauer zu ergreifen. In einem solchen Fall wirken die von der Modulation vorgegebenen Einschaltdauern $t_i$* nicht mehr unmittelbar auf die entsprechenden Thyristoren ein, sondern werden vorteilhaft insbesondere geringfügig so verlängert, daß die gewünschte Proportionalität aufrechterhalten bleibt.

Es läßt sich zeigen, daß das Verhältnis von Stromzeitfläche zu Einschaltdauer dann nicht mehr dem Wert $I_d$ entspricht, wenn die Einschaltdauer $t_i$ mehr als 30 elektrische Winkelgrade vor Ablauf der vollständigen Kommutierung bei 90° im Zeitpunkt $t_3$ gemäß der FIG 3 endet. Aus diesem Grund werden Einschaltdauern $t_i$ im Bereich

$$\frac{1}{\omega_0} + \frac{1}{6}\left(\frac{2\pi}{\omega_0}\right) < t_i < \frac{1}{\omega_0} + \frac{1}{4}\ \frac{2\pi}{\omega_0}$$

als unvollständige Kommutierungen "erster Art", und Einschaltdauern im Bereich

$$\frac{1}{\omega_0} < t_i < \frac{1}{\omega_0} + \frac{1}{6}\left(\frac{2\pi}{\omega_0}\right)$$

als unvollständige Kommutierungen "zweiter Art" bezeichnet. Während bei der ersten Art keinerlei Veränderungen gegenüber vollständigen Kommutierungen notwendig sind, ist es vorteilhaft, bei der zweiten Art zwischen den von der Modulation aufgrund des Tastverhältnisses geforderten Solleinschalt dauern $t_i$* und den Dauern $t_i$ der nach einer Korrektur tatsächlich einwirkenden Einschaltimpulse zu unterscheiden.

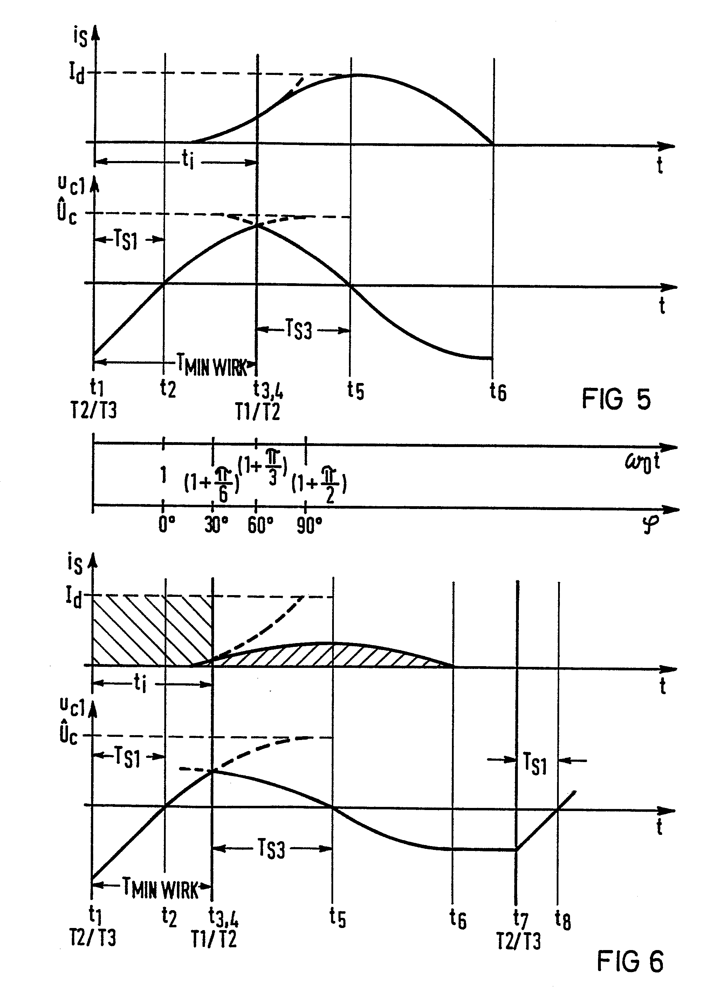

So sind in FIG 5 bzw. 6 zwei unvollständige Kommutierungen zweiter Art mit Impulsdauern $t_i$ von ca.

$$\frac{1}{\omega_0} + \frac{1}{6}\left(\frac{2\pi}{\omega_0}\right) \quad \text{bzw.} \quad \frac{1}{\omega_0} + \frac{1}{12}\ \frac{2\pi}{\omega_0}$$

beispielhaft dargestellt. Dabei wird die in FIG 5 dargestellte Kommutierung auf die Phase S gerade bei einem elektrischen Phasenwinkel von 30° vor dem vollständigen Ablauf einer Kommutierung beendet, was gerade der Grenze zwischen Kommutierungen erster und zweiter Art enspricht. Die Einschaltdauer $t_i$ für den Thyristor T3 ist in diesem Fall gerade so groß, daß der Phasenstrom $i_S$ im Zeitpunkt $t_5$ mit dem Ende des ersten Kommutierungsabschnittes der nächsten Kommutierung auf die Phase R noch den Maximalwert $I_d$ erreicht. Unterschreitet die Dauer $t_i$ sehr kurzer von der Modulation vorgegebener Einschaltimpulse diesen Grenzwert von

$$\frac{1}{\omega_0}\left(1 + \frac{\pi}{3}\right),$$

so nimmt die effektive Stromzeitfläche unter dem jeweiligen Phasenstrom überproportional ab. Im Ausführungsbeispiel der FIG 6 ist die theoretische Sollstromzeitfläche wiederum als schraffiertes Rechteck mit den Kanten $t_i$ und $I_d$ dargestellt, während die sich unter dem Verlauf von $i_s$ tatsächlich einstellende Fläche merklich kleiner ist. Diese läßt sich vorteilhaft mittels der Geradengleichung

$$FI \approx I_d \; \frac{3 + \pi}{\pi} \; \left( t_i - \frac{1}{\omega_0} \right)$$

annähern, woraus sich nach Gleichsetzen mit der geforderten Stromzeitfläche

$$FI = I_d \cdot t_i \cdot$$

eine vorteilhafte Korrekturfunktion für die tatsächliche Einschaltdauer

$$t_i = \frac{\pi}{3 + \pi} \, t_i{}^* + \frac{1}{\omega_0}$$

zur Aufrechterhaltung der linearen Steuerungsfähigkeit der Stromzeitfläche auch bei unvollständiger Kommutierung zweiter Art ergibt.

Theoretisch kann die Einschaltdauer $t_i$ so verkürzt werden, daß sie nur knapp größer als die Wechselrichterschonzeit des zu Beginn dieses Einschaltimpulses gerade abgeschalteten Thyristors ist, in FIG 6 z.B. des Thyristors T1 im Zeitpunkt $t_1$. In diesem Fall würde der Zeitpunkt $t_{3,4}$ nahezu mit dem Zeitpunkt $t_2$ zusammenfallen. Man erkennt, daß die im ersten Abschnitt $t_{3,4} \ldots t_5$ der nächsten Kommutierung für den abgeschalteten Thyristor T3 zur Verfügung stehende Schonzeit $T_{S3}$ wiederum wesentlich größer als die Schonzeit

$$\frac{1}{\omega_0}$$

bei vollständiger Kommutierung ist. In der Praxis ist es jedoch vorteilhaft, so kurze Einschaltdauern zu unterdrücken. Wie aus dem Beispiel gemäß der FIG 6 zu erkennen ist, wird der Kommutierungskondensator C1 aufgrund der kurzen Einschaltdauer $t_1 \ldots t_{3,4}$ nur unvollständig aufgeladen. Im Verlauf der sich anschließenden vollständigen Kommutierung ab dem Zeitpunkt $t_{3,4}$ schwingt der Kondensator bis zum Zeitpunkt $t_5$ auf einen reduzierten Spannungsspitzenwert bei umgekehrtem Vorzeichen um. Wird nun bei dem bereits beschriebenen Pulsbetrieb der Thyristor T3 erneut im Zeitpunkt $t_7$ eingeschaltet, so ist die jetzt auftretende Wechselrichterschonzeit $t_{S1}$ bis zum Ablauf des ersten Kommutierungsabschnittes im Zeitpunkt $t_8$ wesentlich verkürzt. Das Ende $t_{3,4}$ des Einschaltimpulses $t_i$ sollte deshalb vorteilhaft nur soweit vorverlegt erden, daß die bei der erneuten Einschaltung desselben Thyristors T1 im Pulsbetrieb auftretende Wechselrichter schonzeit $T'_{S1}$ im Zeitpunkt $t_7$ die bauelementespezifische Thyristorfreiwerdezeit nicht unterschreitet. In der Praxis wird somit die Dauer von Einschaltimpulsen $t_i$ mit unvollständiger Kommutierung vorteilhaft auf etwa

$$t_i \approx \frac{1}{\omega_0} + \frac{1}{12} \; \frac{2\pi}{\omega_0}$$

nach unten begrenzt, und kürzere von der Modulation ausgegebene Einschaltdauern werden unterdrückt.

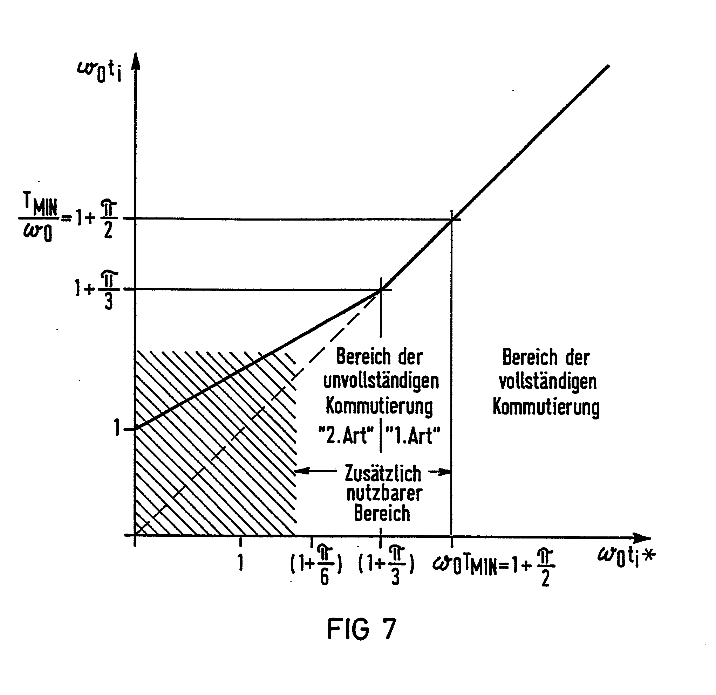

In FIG 7 sind die Einschaltdauern, normiert auf die Kreisfrequenz $\omega_0$ des Kommutierungsschwingkreises, übersichtlich in Form einer Korrekturfunktion dargestellt. Dabei werden im Bereich der vollständigen Kommutierungen bei Einschaltdauern

$$t_i{}^* = t_i \geqq \left[ T_{MIN} = \frac{1}{\omega_0} \left(1 + \frac{\pi}{2}\right) \right]$$

diese unverändert zur Einschaltung der Thyristoren verwendet. Erst beim Übergang von unvollständigen Kommutierungen erster Art auf solche der zweiten Art, d.h. bei Unterschreiten des Zeitpunktes

$$t_i{}^* = t_i \approx \frac{1}{\omega_0} \left(1 + \frac{\pi}{3}\right) ,$$

folgt die nun abknickende Korrekturfunktion der erfindungsgemäßen Geradengleichung

$$t_i = \frac{\pi}{3 + \pi} \, t_i{}^* + \frac{1}{\omega_0}$$

Schraffiert eingetragen ist der wegen der einzuhaltenden Thyristorfreiwerdezeit nicht erreichbare Bereich ab etwa

$$t_i \leqq \frac{1}{\omega_0} \left(1 + \frac{\pi}{6}\right)$$

Der sich aufgrund der erfindungsgemäßen unvollständigen Kommutierungen gegenüber der bisher verwendeten vollständigen Kommutierung zusätzlich nutzbare Bereich ist in Form eines Doppelpfeiles näherungsweise eingetragen.


## Ansprüche

1. Verfahren zur Erzeugung eines im zeitlichen Mittel möglichst gleichmäßigen Umlaufes eines effektiven Raumzeigers (Z) des Ständerstromes einer Asynchronmaschine, die von einem durch einen Gleichstromzwischenkreis gespeisten Wechselrichter mit Phasenfolgelöschung betrieben wird, wobei durch Zünden je eines Wechselrichterthyristors in einer von der Maschinendrehrichtung abhängigen Kommutierungsreihenfolge zyklisch umlaufend je einer von sechs äquidistanten natürlichen Raumzeigern (I bis VI) wirksam wird, und bei niedrigen Maschinendrehzahlen zusätzlich pulsartig zwischen je zwei benachbarten natürlichen Raumzeigern umgeschaltet wird, **dadurch gekennzeichnet**, daß ein beim pulsartigen Umschalten auftretender Einschaltimpuls ($t_i$ ) für einen der beiden Wechselrichterthyristoren, der kürzer als die für den Ablauf einer vollständigen Wechselrichterkommutierung notwendigen Mindestzeit ($T_{MIN}$) und länger als die Wechselrichterschonzeit ($T_S$) ist, nicht unterdrückt und nach seinem Ablauf dennoch die nächste Kommutierung eingeleitet wird.

2. Verfahren nach Anspruch 1, **dadurch gekennzeichnet**, daß eine die Mindestzeit unterschreitende Dauer eines Einschaltimpulses ($t_i$ ) für einen der Wechselrichterthyristoren nach unten so begrenzt wird, daß die bei dessen erneuter Einschaltung im Pulsbetrieb auftretende Schonzeit ($T_S$) die Freiwerdezeit des Thyristors nicht unterschreitet.

3. Verfahren nach Anspruch 1 oder 2, **dadurch gekennzeichnet**, daß bei einem vorgegebenen Sollwert für die Dauer eines Einschaltimpulses ($t_i$ *) dessen tatsächliche Dauer ($t_i$) so korrigiert wird, daß die im entsprechenden Motorstrang erzeugbare Stromzeitfläche (FI) auch bei die Mindestzeit ($T_{MIN}$) unterschreitenden Einschaltimpulsen unverändert linear zur vorgegebenen Sollimpulsdauer ($t_i$ *) ist.

4. Verfahren nach Anspruch 3, **dadurch gekennzeichnet**, daß die Dauer eines Einschaltimpulses dann korrigiert wird, wenn diese einen Wert unterschreitet, welcher der Summe aus der Wechselrichterschonzeit und dem sechsten Teil der Periodendauer

$$\frac{2\,\pi}{\omega_0}$$

einer Stromschwingung in dem aus den betroffenen Kommutierungskondensatoren und Maschinenstreuinduktivitäten gebildeten Kommutierungsschwingkreis entspricht.

5. Verfahren nach Anspruch 3 und 4, **dadurch gekennzeichnet,** daß die Korrektur der Dauer $t_i$ der Einschaltimpulse abhängig von der Kreisfrequenz $\omega_0$ einer Stromschwingung im Kommutierungsschwingkreis durchgeführt wird, und mittels einer modulationsabhängig vorgegebenen Sollimpulsdauer $t_i{}^*$ nach der Gleichung

$$t_i \;=\; \frac{\pi}{3 + \pi}\; t_i{}^* \;+\; \frac{1}{\omega_0}$$

angenähert wird.

FIG 1

FIG 2

FIG 3

FIG 4

FIG 5

FIG 6

86 P 3378

FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-2 194 071 (SIEMENS) ----- | | H 02 M 7/515 |

**RECHERCHIERTE SACHGEBIETE (Int. Cl.4)**

H 02 M 7/00
H 02 P 7/00

Der vorliegende Recherchenbericht wurde für alle Patentansprüche erstellt

| Recherchenort | Abschlußdatum der Recherche | Prüfer |
|---|---|---|
| DEN HAAG | 04-01-1988 | BERTIN M.H.J. |

EPO FORM 1503 03.82 (P0403)